# EUROPEAN PATENT APPLICATION

(11) **EP 4 382 853 A1**
(43) Date of publication of application: **12.06.2024**
(21) Application number: 22211721.0
(22) Date of filing: 06.12.2022
(51) Int. Cl.: G01B 11/02, G01N 21/88, G01N 35/10

(54) **METHOD AND FOCUSING APPARATUS FOR ADJUSTING A CAMERA DEVICE AND A DISPENSER CAPILLARY OF A DROPLET DISPENSER DEVICE**

(71) Applicant: Scienion GmbH, 12489 Berlin (DE)
(72) Inventor: LU, Ying, 69008 Lyon (FR)
(74) Representative: v. Bezold & Partner Patentanwälte - PartG mbB

(57) **Abstract**

A method of adjusting a camera device 10 and a dispenser capillary 20 of a droplet dispenser device 100 relative to each other comprises the steps positioning the camera device 10 and the dispenser capillary 20 along an imaging axis 12 of the camera device 10, such that a focal distance is set between the camera device 10 and the dispenser capillary 20, wherein a focused dispenser capillary image 1 including an inner-capillary area section 2 and at least one capillary wall section 3 is created within a field of view of the camera device 10, wherein the focal distance is set by an axial focusing movement of at least one of the camera device 10 and the dispenser capillary 20 along the imaging axis 12 in dependency on image information collected with the camera device 10, and wherein the image information comprises at least one of a size of the inner-capillary area section 2 and a size of the at least one capillary wall section 3, and the axial focusing movement of the at least one of the camera device 10 and the dispenser capillary 20 is executed such that the size of the inner-capillary area section 2 is maximized and/or the size of the at least one capillary wall section 3 is minimized. Furthermore, a focusing apparatus 100 and a droplet dispenser device 200 are described.

## Description

### Field of the invention

The invention relates to a method of adjusting a camera device and a dispenser capillary of a droplet dispenser device, like a piezo-electric droplet dispenser device, relative to each other. In particular, the invention relates to an image-processing based mutual adjustment of the camera device and the dispenser capillary. Furthermore, the invention relates to a focusing apparatus being configured for adjusting a camera device and a dispenser capillary of a droplet dispenser device relative to each other. The invention also relates to a dispensing method and a droplet dispenser device employing the method and/or apparatus for adjusting the camera device and the dispenser capillary relative to each other. Applications of the invention are available in the field of dispensing droplets, e.g. for investigating and/or processing liquid samples, in particular in (bio-)chemistry and medicine.

### Background of the invention

In the present specification, reference is made to the following prior art illustrating the technical background of the invention, in particular relating to autofocusing techniques.
[1] US 2017/0274689 A1;
[2] US 2021/0121871 A1;
[3] O. Baltag "History of automatic focusing reflected by patents" in "Science" 2015, 3(1): 1-17; and
[4] US 8 508 652 B2.

Droplet dispenser devices for placing liquid droplets on a target, like a substrate, vessel or compartmented plate, are generally known. Usually, droplet dispenser devices include at least one dispenser capillary and a camera. The dispenser capillary which serves for liquid dispensing usually has three translation degrees of freedom along three axes perpendicular to each other. The camera is employed for monitoring the dispenser capillary and/or the dispenser operation. In particular, the camera can be employed for controlling the droplet dispenser device in dependency on features of the liquid droplet and/or features of a sample included in the liquid to be dispensed. For example, for processing biological samples, e.g. for separation of samples or executing chemical reactions, droplets are to be placed at specific target locations depending on sample features, or dispensing steps are to be controlled in dependency on operation conditions of the droplet dispenser device, e.g. in dependency on the presence and/or features of one or more particles in a nozzle section of the dispenser capillary (see e.g. [1] or [2]).

The camera of the droplet dispenser device can be used for determining the presence or the specific features of particles in the nozzle section. Usually, the camera comprises a microscope with a fixed focal length and a fixed position, while the dispenser capillary is movable. The dispenser capillary and the mechanical system to move it are controlled by a control device. For imaging the nozzle section, in particular for getting a clear image of the content of the dispenser capillary, which could be used after e.g. for image based single cell detection, a center plane of the dispenser capillary is to be arranged at a focal distance from the camera, i.e. in a focal plane of the camera.

Setting the focal distance between the camera and the dispenser capillary can be obtained by setting the dispenser capillary with the mechanical system to a predetermined position which is assumed to represent the focal plane of the camera. However, this setting translation to the given position has not sufficient precision for current dispensing techniques. Alternatively, the camera can be used for imaging the nozzle section and setting the focal distance in dependency on image features. This image processing based focusing is challenging as the dispenser capillary is transparent and has a 3-dimensional shape. In particular, if the camera objective has a depth of focus much smaller than the dimension of the nozzle, a sharp image is obtained when the focal plane intersects with many parts of the nozzle section. Therefore, conventional image based autofocus criteria which are based on sharpness or contrast of the image (see e.g. [3], [4]) cannot help to find the center plane of the dispenser capillary with sufficient speed, reliability and precision. Furthermore, sharpness or contrast based criteria are not robust to lighting condition change.

### Objective of the invention

The objective of the invention is to provide an improved method and/or apparatus for adjusting a camera device and a dispenser capillary of a droplet dispenser device relative to each other, wherein disadvantages of conventional techniques are avoided. In particular, the mutual adjustment is to be capable of setting the focal distance with improved reliability, improved precision, increased speed, less processing power, and/or with an automated process. Another objective is to provide an improved dispensing process and/or an improved droplet dispenser device employing the method and/or apparatus for adjusting the camera device and the dispenser capillary.

### Summary of the invention

The above objectives are solved by a method and/or an apparatus for adjusting a camera device and a dispenser capillary of a droplet dispenser device relative to each other, and/or by a dispensing process and/or a droplet dispenser device, comprising the features of the independent claims. Advantageous embodiments and applications of the invention are defined in the dependent claims.

According to a first general aspect of the invention, the above objective is solved by a method of adjusting a camera device and a dispenser capillary of a droplet dispenser device relative to each other. The camera device and the dispenser capillary are positioned along an imaging axis of the camera device, such that a focal distance is set between the camera device and the dispenser capillary, wherein a focused dispenser capillary image including an inner-capillary area section and at least one capillary wall section is created within a field of view of the camera device, and wherein the focal distance is set by an axial focusing movement of at least one of the camera device and the dispenser capillary along the imaging axis in dependency on image information collected with the camera device.

According to the invention, the image information comprises at least one of a size of the inner-capillary area section and a size of the at least one capillary wall section, and the axial focusing movement of the at least one of the camera device and the dispenser capillary is executed such that the size of the inner-capillary area section is maximized and/or the size of the at least one capillary wall section is minimized. Preferably, the camera device and the dispenser capillary are set with the focal distance when the size of the inner-capillary area section is maximized and/or the size of the at least one capillary wall section is minimized.

According to a second general aspect of the invention, the above objective is solved by a focusing apparatus being configured for adjusting a camera device and a dispenser capillary of a droplet dispenser device relative to each other. The focusing apparatus comprises a positioning device being configured for positioning the camera device and the dispenser capillary along an imaging axis of the camera device, such that a focal distance is set between the camera device and the dispenser capillary, wherein a focused dispenser capillary image including an inner-capillary area section and at least one capillary wall section is created within a field of view of the camera device, a focusing translation stage (also referred to as positioning device) being arranged for setting the focal distance by an axial focusing movement of at least one of the camera device and the dispenser capillary along the imaging axis in dependency on image information collected with the camera device, and a control device, like e.g. a computer device, being configured for controlling the focusing translation stage in dependency on the image information collected with the camera device. According to the invention, the image information comprises at least one of a size of the inner-capillary area section and a size of the at least one capillary wall section, and the focusing translation stage is arranged for the axial focusing movement of at least one of the camera device and the dispenser capillary, such that the size of the inner-capillary area section is maximized and/or the size of the at least one capillary wall section is minimized. Preferably, the focusing apparatus or an embodiment thereof is adapted for executing the method according to the first general aspect of the invention or an embodiment thereof.

According to a third general aspect of the invention, the above objective is solved by a dispensing method of depositing at least one liquid droplet with a droplet dispenser device on a target, wherein the droplet dispenser device comprises at least one dispenser capillary and a camera device, comprising the steps of adjusting the camera device and the dispenser capillary relative to each other with the adjusting method according to the first general aspect of the invention or an embodiment thereof and/or with the focusing apparatus according to the second general aspect of the invention or an embodiment thereof, such that the focal distance is set and the focused dispenser capillary image is created within a field of view of the camera device, and operating the at least one dispenser capillary for depositing the at least one liquid droplet on the target.

According to a fourth general aspect of the invention, the above objective is solved by a droplet dispenser device being configured for depositing at least one liquid droplet on a target, comprising at least one dispenser capillary being arranged for depositing the at least one liquid droplet on the target, a camera device being arranged for monitoring the at least one dispenser capillary, and a focusing apparatus according to the second general aspect of the invention or an embodiment thereof. Preferably, the droplet dispenser device or an embodiment thereof is adapted for executing the method according to the third general aspect of the invention or an embodiment thereof.

The focusing translation stage of the focusing apparatus preferably is provided by a translation stage of the at least one dispenser capillary, and/or the control device of the focusing apparatus preferably is provided by a droplet dispenser control unit of the droplet dispenser device. Accordingly, the focusing apparatus of the invention generally can be provided by components of the droplet dispenser device, wherein the droplet dispenser control unit of the droplet dispenser device is adapted for executing the method according to the first general aspect of the invention or an embodiment thereof. Alternatively, the focusing apparatus of the invention can be provided by components provided additionally to the droplet dispenser control unit and/or the capillary translation stage of the droplet dispenser device.

Preferably, the camera device has a camera objective with a fixed focal distance. With a preferred example, the camera device comprises a microscope with a camera sensor, wherein the microscope objective provides the camera objective. Alternatively, the camera objective may have a variable focal distance, which preferably is kept constant during the adjustment of the invention and the dispensing operation.

The droplet dispenser device comprises one single dispenser or plural dispensers. The dispenser capillary to be adjusted is the single dispenser or one dispenser of the plural dispensers. The dispenser capillary has a capillary wall with a longitudinal extension (dispenser axis, preferably parallel to direction of gravity, z-direction) and an inner-capillary volume. A distal end of the dispenser capillary provides a nozzle section with a nozzle opening (orifice) of the dispenser capillary. The dispenser is adapted for a droplet dispensing operation, wherein a droplet is expelled through the nozzle opening of the nozzle section, e.g. by a piezo-electrically induced pressure pulse (piezo-electric dispenser) or another driving mechanism. The capillary wall is preferably made of a transparent, particularly preferred optically clear material, e.g. glass or plastic, allowing an illumination and imaging of the inner-capillary volume. Accordingly, the camera image includes the inner-capillary area section, i.e. a portion representing a cross-section of the inner-capillary volume, and the at least one capillary wall section, i.e. a portions representing cross-sections of the capillary wall material, adjacent to the inner-capillary area section. Preferably, the camera image includes the nozzle section down to the nozzle opening. Due to the transparency of the capillary wall, the camera image preferably can be understood as a cross-sectional image of the nozzle section.

Positioning the camera device and the dispenser capillary comprises arranging the camera device and the dispenser capillary relative to each other such that the imaging axis (optical axis) of the camera device crosses the dispenser capillary, in particular the dispenser axis. Preferably, the imaging axis and the dispenser axis are perpendicular relative to each other. Setting the focal distance between the camera device and the dispenser capillary means that the dispenser capillary, in particular a central cross-sectional plane thereof, is arranged in the focal plane of the camera device (focal position). When the focal distance is reached, the capillary image is the focused dispenser capillary image to be obtained.

Arranging the dispenser capillary, in particular the central cross-sectional plane thereof, in the focal plane of the camera device comprises reaching an exact position in the ideal focal plane or approaching the ideal focal plane such that the dispenser capillary image is sufficiently focused for the camera-based monitoring of the dispenser capillary in the subsequent operation thereof (in particular, the dispenser capillary image is focused such that a reliable camera-based monitoring is obtained). Accordingly, maximizing a size of the inner-capillary area section and/or minimizing a size of the at least one capillary wall section means approaching the size of the inner-capillary area section and/or capillary wall section to a global extremum (maximum or minimum, respectively) representing the arrangement of the dispenser capillary in the focal plane of the camera device. The size of the inner-capillary area section and/or capillary wall section is approached to the global extremum when the dispenser capillary, in particular the central cross-sectional plane thereof, is in the ideal focal plane or sufficiently near to the ideal focal plane for the camera-based monitoring of the dispenser capillary in the subsequent operation thereof.

A unique part of the invention is that the inner-capillary area and/or the capillary wall area is detected in the image as a criterion for finding the best focal position. The inventors have found that the size of the inner-capillary area section and/or the size of the at least one capillary wall section provide measures of approaching the focal distance. Optionally, the shape of the inner-capillary area section and/or the shape of the at least one capillary wall section can provide additional criteria of approaching the focal distance. During the adjusting method, the size of the inner-capillary area section and/or the at least one capillary wall section can be used as a direct measure for maximizing the inner-capillary area section and/or minimizing the at least one capillary wall section in the image. Optionally, the shape of the inner-capillary area section and/or the at least one capillary wall section can be used as an indirect measure for maximizing the inner-capillary area section and/or minimizing the at least one capillary wall section.

The larger the inner-capillary area section the closer the setting of the focal distance is. Alternatively or in addition, the smaller the at least one capillary wall section is, the closer the setting of the focal distance is. The inventors have found that setting the focal distance can be obtained by the axial focusing movement of at least one of the camera device and the dispenser capillary along the imaging axis until the size of the inner-capillary area section is maximized compared with the size with previous settings, i.e. the inner-capillary area section does not further increase with further axial focusing movement, and/or until the size of the at least one capillary wall section is minimized compared with the size with previous settings, i.e. the at least one capillary wall section do not further decrease with further axial focusing movement.

Advantageously, with the inventive technique, conventional techniques of assessing a sharpness or contrast of the camera image can be avoided, so that the presence of plural parts of the nozzle section in the focal plane cannot disturb the adjusting process any longer. With monitoring the size of the inner-capillary area section and/or the at least one capillary wall section, focusing can be obtained with improved reliability and improved precision. Analyzing the size of the inner-capillary area section and/or the at least one capillary wall section is possible with less computer processing power, and the adjustment can be done with increased speed. Furthermore, the inventive technique may be automated. With a preferred application, the invention can be applied to autofocusing on a transparent capillary, in particular with an orifice diameter smaller than the depth of focus of the camera device, in particular the objective thereof.

Preferably, an inner space of the capillary has an axial symmetry with a center axis of the capillary (the dispenser axis), in particular with a cylinder (and/or part of a circular cone) shape. When the detected inner-capillary area is the largest, this means the focal plane is at the center of the capillary (in particular the detected area passes through the axis of the capillary). This finding of the inventors facilitates to make use of the detected inner-capillary area as the criterion to find the best focal position. Advantageously, this technique is robust to any lighting condition change. Optionally, the shape of the detected inner-capillary area additionally can be employed to determine whether the focal plane is in front of or behind the capillary axis, so that an exhaustive search along the camera-object axis can be avoided and the autofocus process even can be made faster.

The axial focusing movement of the at least one of the camera device and the dispenser capillary along the imaging axis preferably is a stepwise movement, including changing the axial distance of the camera device and the dispenser capillary by moving with a step size (or: increment), followed by determining and assessing the size of the inner-capillary area section and/or the at least one capillary wall section after each step. Advantageously, various embodiments of setting the step size are available, wherein the step size may have a fixed length during the whole adjustment, or it may vary during approaching the focal distance.

According to a first variant of setting the step size, the axial focusing movement includes stepwise moving at least one of the camera device and the dispenser capillary with a predetermined fixed step size from a first imaging distance between the camera device and the dispenser capillary to a second imaging distance between the camera device and the dispenser capillary and determining the size of the inner-capillary area section and/or the size of the at least one capillary wall section at each step, wherein the focal distance is between the first and second imaging distances, and assigning the focal distance to a selected imaging distance between the camera device and the dispenser capillary at a selected step, where the size of the inner-capillary area section is maximized and/or the size of the at least one capillary wall section is minimized. In terms of the focusing apparatus, the control device and the focusing translation stage are arranged for executing the axial focusing movement with the stepwise moving at least one of the camera device and the dispenser capillary with the predetermined fixed step size and assigning the focal distance to the selected imaging distance between the camera device and the dispenser capillary at a selected step, where the size of the inner-capillary area section is maximized and/or the size of the at least one capillary wall section is minimized.

This embodiment employing the fixed step-size may have advantages in terms of robustness and easy control. The step size can be chosen such that finding a local extremum instead of the global extremum is avoided. The fixed step size can be preselected in dependency on the required precision of setting the focal distance. However, there is a trade-off in this first variant of the autofocusing process between the accuracy of the final focused position and the total execution time: the smaller the step size is, the longer time the process will take to find the final focused position, and the more accurate this final focused position will be; on the contrary, the larger the step size is, the less time the process will take, and the less accurate the final focused position will be.

According to a second variant of setting the step size, the axial focusing movement includes the steps of a first movement phase of stepwise moving at least one of the camera device and the dispenser capillary with a first fixed step size from a first imaging distance between the camera device and the dispenser capillary to a second imaging distance between the camera device and the dispenser capillary and determining the size of the inner-capillary area section and/or the size of the at least one capillary wall section at each step, wherein the focal distance is between the first and second imaging distances, determining a first selected imaging distance between the camera device and the dispenser capillary at a first selected step, where the size of the inner-capillary area section is maximized and/or the size of the at least one capillary wall section is minimized in the first movement phase, a second movement phase of stepwise moving at least one of the camera device and the dispenser capillary with a second fixed step size around the selected imaging distance and determining the size of the inner-capillary area section and/or the size of the at least one capillary wall section at each step, wherein the second step size is smaller than the first step size, and assigning the focal distance to a second selected imaging distance between the camera device and the dispenser capillary at a second selected step, where the size of the inner-capillary area section is maximized and/or the size of the at least one capillary wall section is minimized in the second movement phase. In terms of the focusing apparatus, the control device and the focusing translation stage are arranged for executing the axial focusing movement with the first and second movement phases, determining the first selected imaging distance and assigning the focal distance to the second selected imaging distance.

This embodiment employs two different fixed step-sizes in the first (coarse) and second (fine) movement phases, resp.. The parameters of this process (the coarse step size, the fine step size, and the searching range for the fine search) can be preselected for avoiding to find a local extremum only. The second variant results in advantages in terms of improved efficiency and resolving the above trade-off of the first variant. The process of the second variant is more efficient than the process of the first variant, as less steps are required in employing two different fixed step-sizes to get the same result as with one single fixed step-size.

According to a third variant of setting the step size, the axial focusing movement includes the steps of assigning a first zone (-1), a second zone (+1) and a third zone (0) to a range between the camera device and the dispenser capillary, wherein imaging distances in the first zone (-1) are smaller than the focal distance, imaging distances in the second zone (+1) are larger than the focal distance, and the third zone (0) is located between the first and second zones (-1, +1) and the third zone (0) includes the focal distance, a first movement phase of stepwise moving at least one of the camera device and the dispenser capillary with a first step size from the first zone (-1) to the second zone (+1) and determining an initial first border at the last step before the third zone (0) in the first zone (-1) and an initial second border in the third zone (0) or at the first step outside the third zone (0) in the second zone (+1), a subsequent second movement phase of stepwise moving at least one of the camera device and the dispenser capillary with a stepwise adapted, in particular stepwise reduced, second step size from the initial second border towards the initial first border and, when reaching the first zone (-1), back towards the initial second border, wherein updated first and second borders are assigned to the steps in the second movement phase, until a distance between the updated first and second borders is smaller than a predetermined minimum step size (Sₘᵢₙ), a subsequent third movement phase of stepwise moving at least one of the camera device and the dispenser capillary with a third step size from the updated first border towards the updated second border and determining the size of the inner-capillary area section and/or the size of the at least one capillary wall section at each step, wherein the third step size is smaller than or equal to the minimum step size (Sₘᵢₙ), and assigning the focal distance to a selected imaging distance between the camera device and the dispenser capillary at a selected step, where the size of the inner-capillary area section is maximized and/or the size of the at least one capillary wall section is minimized in the third movement phase. In terms of the focusing apparatus, the control device and the focusing translation stage are arranged for executing the axial focusing movement with the first, second and third movement phases and assigning the focal distance to the selected imaging distance.

Before the first movement phase, the starting position of the dispenser capillary relative to the camera device could be anywhere in the (-1)-zone or in the (0)-zone or in the (+1)-zone. Therefore, if the starting position is in the (0)- or (+1)-zone, the dispenser capillary is moved into the (-1)-zone at the beginning of the first movement phase. Parameters of the first and second movement phases, in particular the initial second border for switching from the first to the second movement phase, can be pre-set on the basis of experimental tests, calibration measurements and/or numerical simulations. The third movement phase of the third variant does not include a changing direction of search, but it is only going in one direction and it will stop and go back one step when the measured inner capillary area starts to decrease and/or the measured capillary wall area starts to increase.

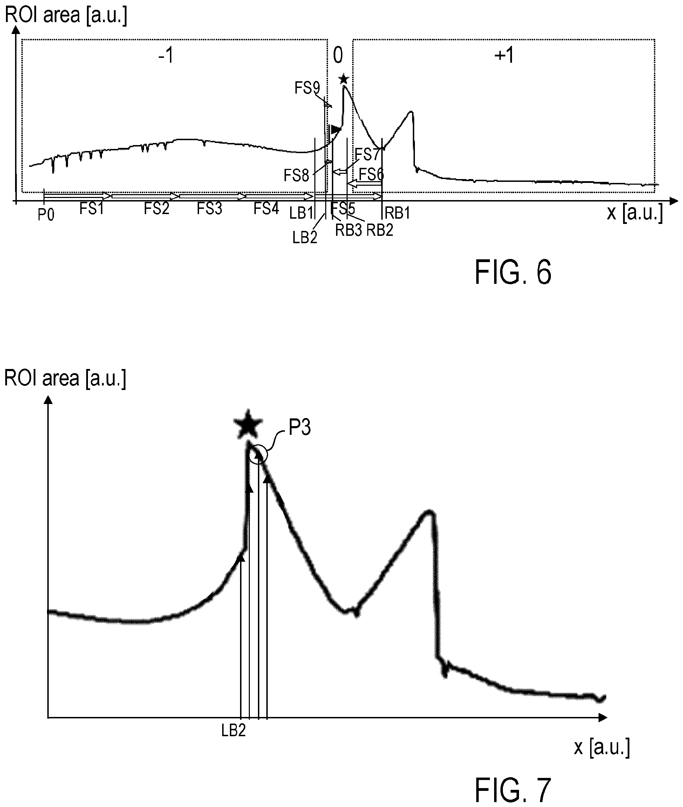

Advantageously, the provision of the three movement phases substantially increases the adjustment speed and precision. A particular advantage of providing the three phases is that an ROI area curve representing a size of the inner-capillary area section in dependency on a distance between the camera device imaging plane and the dispenser capillary (example see below, Figure 6) is not always sufficiently smooth for efficiently finding the focal position. With the three phases, reliability of finding the global extremum related to the focal distance to be set and avoiding a local extremum is further improved. While for the above first and second variants with fixed increments, a starting position far from the middle is required to ensure that the searching range of the first movement covers the global maximum (thus taking more steps in the whole process), the starting position can be chosen in the middle of the moving axis with the third variant (thus taking substantially fewer steps in particular in the first movement phase).

According to a further preferred embodiment of the invention, a movement direction in the first and/or second movement phases is determined by classifying whether a current imaging distance is included in the first zone (-1) or in the second zone (+1) or in the third zone (0) based on at least one of a shape of the inner-capillary area section and a shape of the at least one capillary wall section. Preferably, the control device is configured for executing the (preferably software-based) classifying step. The classifying step comprises an assessment of the geometrical shape of the inner-capillary area section and/or the at least one capillary wall section. Advantageously, the inventors have found that these image sections have different typical shapes when the axis of the capillary is in front of or behind the focal plane of the camera device. Classifying in particular comprises comparing the current shape of the inner-capillary area section and/or the at least one capillary wall section within a collected camera image with at least one predetermined reference shape and deciding whether the first imaging distance is smaller or equal to or larger than the focal distance in dependency on the result of the comparison. Preferably, a classifier is trained that takes a feature vector of the current image as input and gives one of the above first to third zones, e.g. -1, 0 or +1, as output.

According to a further preferred embodiment of the invention, the size of the inner-capillary area section and/or the size of the at least one capillary wall section is obtained by binarizing the dispenser capillary image and analyzing, e.g. counting, the number of pixels associated with the inner-capillary area section and/or the at least one capillary wall section. In terms of the focusing apparatus, the control device is configured for this determination of the size of the inner-capillary area section and/or the size of the at least one capillary wall section. Advantageously, the pixel analyzing-based size determination allows to obtain the size of the inner-capillary area section and/or the at least one capillary wall section with high speed and low processing power.

According to the invention, the focal distance is set by the mutual axial focusing movement of at least one of the camera device and the dispenser capillary along the imaging axis. According to a preferred embodiment of the invention, the focusing movement includes moving the dispenser capillary, while the camera device is fixed. Preferably, the focusing translation stage is arranged for moving the dispenser capillary, while the camera device is fixed. These variants have advantages resulting from the fact that the dispenser capillary is coupled already with a translation stage for moving the capillary to different sites of operation, wherein the translation stage can be employed as the focusing translation stage for setting the focal distance. Accordingly, the focusing translation stage of the focusing apparatus is preferably adapted for moving the dispenser capillary.

Preferably, the method of adjusting the camera device and the dispenser capillary relative to each other includes a further step of a lateral aligning movement of the camera device and the dispenser capillary relative to each other before the axial focusing movement, such that a full cross-sectional image of the dispenser capillary is included, preferably centered, in the field of view of the camera device. Particularly preferred, the aligning movement is executed such that the dispenser capillary image is centered in the field of view of the camera device. Accordingly, the focusing apparatus preferably includes an aligning translation stage being arranged for a lateral aligning movement of the camera device and the dispenser capillary relative to each other before the axial focusing movement such that a full cross-sectional image of the dispenser capillary is included, preferably centered, in the field of view of the camera device.

The lateral aligning movement comprises shifting at least one of the camera device and the dispenser capillary in a plane perpendicular to the imaging axis of the camera device. Preferably, the lateral aligning movement includes moving the dispenser capillary, while the camera device is fixed. For executing the lateral aligning movement, the focusing apparatus preferably includes an aligning translation stage. Particularly preferred, the aligning translation stage is provided by the translations stage of the capillary device.

With the lateral aligning movement, which preferably is automated by an image processing-based loop control, collecting the images of the inner-capillary area section and/or the at least one capillary wall section is improved in an advantageous manner. By moving the capillary to the center of the image field of the camera (auto-center process), precision and reliability of size estimation of the inner-capillary area section and/or the at least one capillary wall section in subsequent moving the center of the capillary to the focal plane of the camera (auto-focus process) are improved.

Features disclosed in the context of the method of adjusting the camera device and the dispenser capillary relative to each other and the embodiments thereof also represent preferred features of the inventive focusing apparatus and embodiments thereof and vice versa. The aforementioned aspects and inventive and preferred features, in particular with regard to the execution of the adjusting method, therefore also apply for the apparatus. The preferred embodiments, variants and features of the invention described above are combinable with one another as desired.

### Brief description of the drawings

Further details and advantages of the invention are described with reference to the attached drawings, which show in
- Figure 1:: a schematic illustration of features of a focusing apparatus and droplet dispenser device according to preferred embodiments of the invention;
- Figure 2:: a flowchart illustrating processes combined with a method of adjusting the camera device and the dispenser capillary relative to each other according to preferred embodiments of the invention;
- Figure 3:: an illustration of a lateral aligning movement;
- Figure 4:: an illustration of capillary images collected during various phases of the adjusting method;
- Figure 5:: an illustration of first and second movement phases of the axial focusing movement according to an embodiment of the invention employing fixed increments; and
- Figures 6 and 7:: an illustration of first, second and third movement phases of the axial focusing movement according to an embodiment of the invention employing varying increments.

### Description of preferred embodiments

Features of preferred embodiments of the invention are described in the following with reference to features of setting a dispenser capillary of a droplet dispenser device in a focal plane of a camera device. Details of droplet dispensing, the droplet dispenser device and the operation thereof are not described as far as they are known per se from prior art techniques. Exemplary reference is made to embodiments of the invention, wherein the focusing apparatus is provided by components of the droplet dispenser device. Alternatively, the focusing apparatus can be provided as a separate setup to be combined with a droplet dispenser device. Furthermore, exemplary reference is made to embodiments of the invention, wherein the dispenser capillary is moved relative to the camera device. Alternatively or in addition, the camera device may be moved relative to the dispenser capillary.

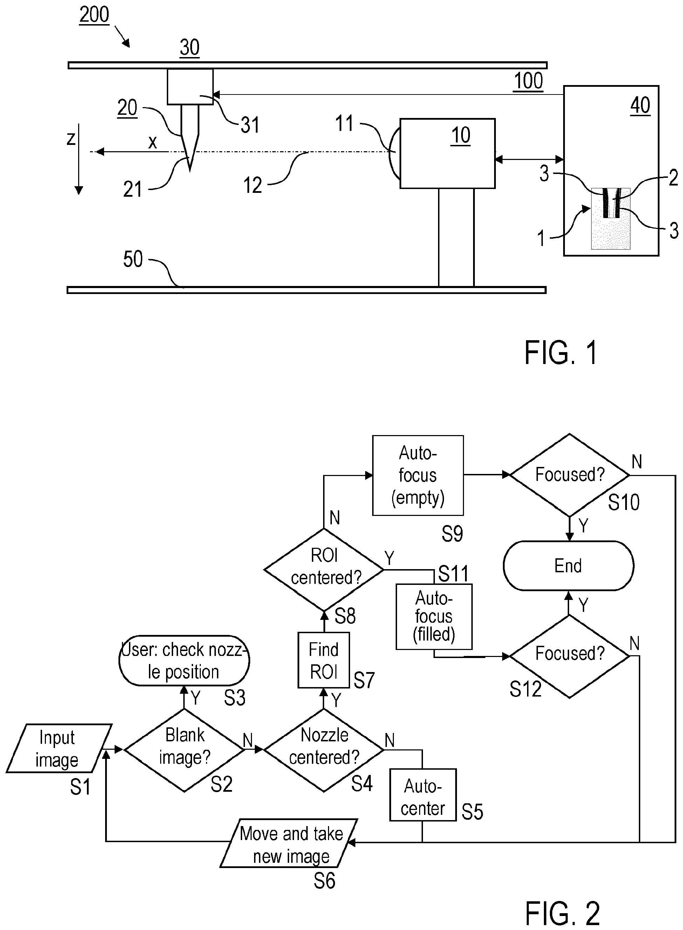

Figure 1 schematically illustrates a droplet dispenser device 200, like the cellenONE or sciFLEX Arrayer (manufacturer: Scienion GmbH, Germany), including a dispenser capillary 20 with a nozzle section 21, a camera device 10, a positioning device 30 with a focusing translation stage 31, a control device 40 and a fixed carrier structure 50, like a platform or laboratory table accommodating substrates or vessels for receiving dispensed samples. According to the illustrated embodiment of the invention, a focusing apparatus 100 for adjusting the camera device 10 and the dispenser capillary 20 relative to each other is provided by components of the droplet dispenser device 200, including the positioning device 30 and the control device 40.

An example image 1 of the cross-sectional shape of the nozzle section 21 including the nozzle opening is shown in the insert in the control device 40. The dispenser capillary image 1 of the nozzle section 21 includes an inner-capillary area section 2, i.e. a portion of the image representing an inner space of the nozzle section, and capillary wall sections 3, i.e. portions of the image representing nozzle walls enclosing the inner space of the nozzle section 21. The inner-capillary area section 2 and/or at least one of the capillary wall sections 3 provide the region of interest (ROI) for capillary imaging during the adjusting method and/or during the operation of the droplet dispenser device 200, e.g. for monitoring particles in the nozzle section 21, after executing the focusing adjustment.

The camera device 10 is provided by a microscope setup including a camera or microscope objective 11 (e.g. PlanFluor, manufacturer Nikon, JP, 10X, NA 0.3, e.g. with fixed focal length) and a camera sensor (not shown). The camera objective 11 has an imaging axis 12. The camera device 10 has a fixed position relative to the carrier structure 50.

The dispenser capillary 20 is e.g. a piezo-electrically driven device, including a piezo actuator (not shown, coupled with the control device 40) and a schematically shown nozzle section 21. The longitudinal extension of the dispenser capillary 20 is parallel to a z-axis (preferably vertical direction, direction of gravitation, in drawing plane). The imaging axis 12 of the camera device 10 is preferably directed perpendicular to the longitudinal extension of the dispenser capillary 20, i.e. along an x-axis, towards the nozzle section 21. Preferably, the imaging axis 12 of the camera device 10 is a horizontal axis.

The positioning device 30 includes a motorized focusing translation stage 31 being configured for at least an axial focusing movement of the dispenser capillary 20 along the imaging axis 12 relative to the fixed carrier structure 50. The axial focusing movement is provided for setting the focal distance, as described with further details below. Preferably, the focusing translation stage 31 is adapted for the movement of the dispenser capillary 20 along at least two orthogonal directions in space (x-y-directions perpendicular to z-axis), but optionally along all three orthogonal directions in space (x-y-z-directions).

The control device 40 is a computer device being coupled with the camera device 10 and the positioning device 30, and optionally with the piezo actuator of the dispenser capillary 20. The control device 40 is adapted for receiving image signals from the camera device 10, processing the image signals and creating drive signals for the positioning device 30. The drive signals are created for causing the movement of the nozzle section 21 until a size of the inner-capillary area section 2 is maximized and/or a size of the capillary wall sections 3 is minimized. When at least one of these conditions is reached, the camera device 10 and the dispenser capillary 20 have the focal distance to be set.

Embodiments of the method of adjusting the dispenser capillary 20 relative to the camera device 10 are illustrated in Figures 2 to 7, wherein the flowchart of Figure 2 shows an overview of the adjusting method being executed with a nozzle section 21 in an empty or filled operation condition. If the method is executed in practice exclusively with an empty nozzle section 21 or exclusively with a filled nozzle section 21, the process may be correspondingly adapted by omitting a test of the operation condition (in particular step S8). Each step shown in Figure 2 may comprise a single step or plural sub-steps (process). The methods described with reference to Figures 2 to 7 preferably are controlled with the control device 40.

According to preferred embodiments of the invention, the method of adjusting the dispenser capillary 20 relative to the camera device 10 has two main processes: the first process is to move the orifice (opening) of the nozzle section 21 to the center of the image captured by the microscopic camera device 10 (auto-center process), and the second process is to move the dispenser capillary 20 along the camera-object imaging axis 12 in order to align the focal plane of the camera device 10 with the center axis of the capillary device 20 (auto-focus process). According to alternative embodiments of the invention, the auto-center process can be omitted, e.g. if centring is inherently obtained by structural features of the droplet dispenser device 200 and/or by a manual adjustment, and/or if the adjusting method is executed without centring, e.g. based on assessing one of the capillary wall sections 3 of the nozzle section 21 only. According to the latter variant, it is possible to see only half of the capillary in the image (so only one side of the capillary wall could be seen and analyzed), and the auto-focus process may be performed by analyzing the capillary wall area without centering the whole capillary. Furthermore, as long as the capillary does not move horizontally or vertically in the image during the adjusting process, the auto-focus process always may be performed without auto-centering.

According to Figure 2, the method starts with an input of an image of the field of view of the camera device 10 (step S1). The image is collected with the camera device 10 and input to the control device 40. With a subsequent step S2, it is tested whether the nozzle section 21 is included in the collected image. If a blank image is collected, the user is requested to check and correct the nozzle position (step S3). Otherwise, if the nozzle section 21 is included in the collected image, it is tested with a subsequent step S4 whether the nozzle section 21 is centered in the field of view. If not, the auto-center process step S5/S6 is started, including moving the dispenser capillary 20 and taking a new image (step S6).

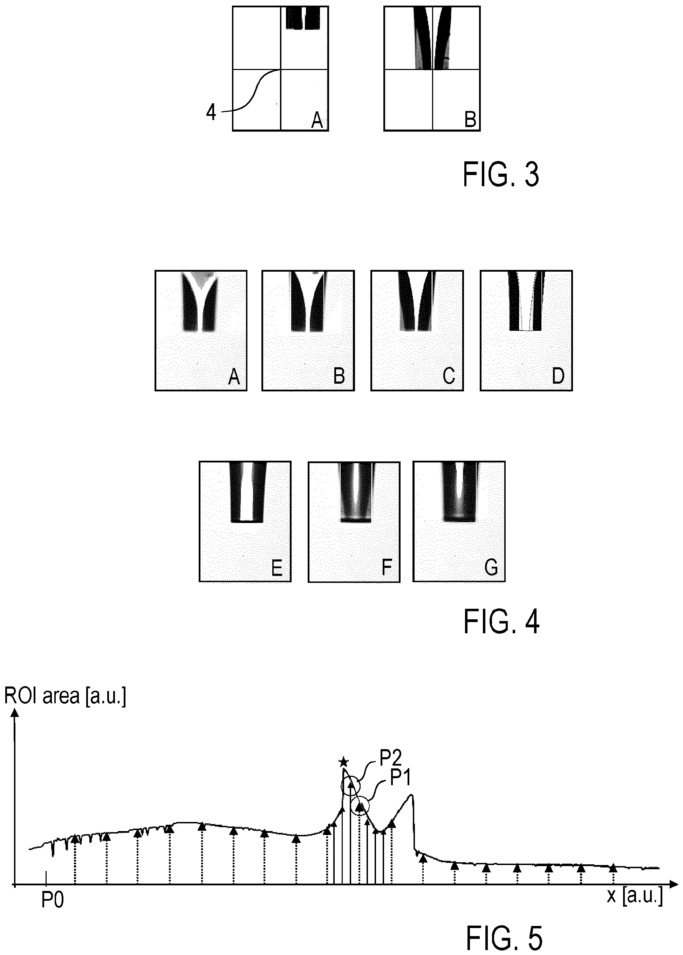

The auto-center process S5/S6 comprises a lateral aligning movement (included in step S6) of the dispenser capillary 20 relative to the camera device 10 in a plane perpendicular to the imaging axis 12. The lateral aligning movement is preferably executed until the full cross-sectional image of the dispenser capillary 20, in particular of the nozzle section 21, is at least included, particularly preferred centered in the field of view of the camera device 10. The orifice of the nozzle section 21 is preferably arranged in the image center. Figure 3 illustrates examples of nozzle section images before (Figure 3A) and after (Figure 3B) executing the auto-center process (the image center 4 is illustrated with auxiliary lines).

As an alternative to positioning the center of the orifice in the image center, the center of the orifice can be arranged in a lower part of the image. This variant is preferred in adjusting nano dispenser capillaries, which normally are larger than piezo dispenser capillaries.

With more details of the auto-center process S5/S6, a bounding box is defined as a reference rectangle that delimits the area of the nozzle section 21. The bounding box of the nozzle section 21 is detected in the image. A bottom middle point of the bounding box is considered as the orifice of the dispenser capillary 20. The vertical and horizontal distances (number of pixels) of this point to the image center 4 are calculated and converted from pixels to micrometres. Subsequently, the dispenser capillary 20 is moved by these distances in order to move the orifice to the image center 4. A new image is taken (included in step S6), followed by steps S2 and S4 as mentioned.

When it is determined at step S4 that the nozzle section 21 is centered in the field of view, in particular when the orifice of the dispenser capillary 20 is located in the centre of the field of view, the process continues with step S7 of finding the ROI, e.g. the inner-capillary area section 2. The image of the nozzle section 21 is processed for identifying the ROI. With step S8, it is tested whether the ROI is centered in the image. If the ROI is found to be centered in the field of view in step S8, the nozzle section 21 is considered as a filled nozzle. Otherwise, the nozzle section 21 is considered as an empty nozzle.

The further process depends on the results of the test in step S8. For the filled nozzle, i.e. with the centered ROI, the inner-capillary area section 2 is used as the criterion to be maximized in subsequent finding the focused position of the dispenser capillary. For the empty nozzle, since it may be difficult to find a smooth boundary of the inner empty area, preferably the size of the capillary wall sections is the criterion to be minimized in finding the focused position of the dispenser capillary.

Accordingly, if the nozzle section 21 is empty, the auto-focus process for the empty capillary is executed with step S9. For determining the size of the capillary wall sections, the pixels of the glass part in the nozzle section image are counted. With more details, firstly the image of the empty nozzle is binarized. After binarization, e.g. the dark pixels correspond to the capillary wall sections 3 (glass part) of the nozzle section. The total number of the dark pixels is counted, and the focused position corresponds to where the number of the dark pixels is the smallest (this equals that the inner area is the biggest).

Embodiments of finding the focused position are described below with reference to Figures 5 to 7. The search for the focused position is completed, when the number of the dark pixels has been checked at all tested capillary positions and the dispenser capillary is at the position that corresponds to the smallest capillary wall size and a Boolean variable "Focused?" is set True.

Subsequently, it is tested whether the dispenser capillary 20 is focused, i.e. arranged in the focal plane of the camera device 10 (step S10) by checking the Boolean variable "Focused?" (step S10). If True, the process is completed, the iteration loop is left and the regular operation of the dispenser apparatus 200 can be started, e.g. with image based single cell detection in the capillary. If the Boolean variable "Focused?" is False, i.e. if the dispenser capillary 20 is not focused, the auto-focus process step S9 is repeated, either after repetition of steps S6, S2, S4, S7 and S8, or by directly bypassing the latter steps. The auto-focus process step S9 for the empty capillary is repeated until the dispenser capillary 20 is focused, i.e. the capillary wall sections 3 are minimized in the nozzle image.

Repetition of steps S6, S2, S4, S7 and S8 is not necessary, but preferably implemented to make the process more robust in case of accidents in extreme situations. For example, if the capillary breaks during auto-focusing, a blank image is got, so that step S2 could help to find this accident and jump out of the auto-focus loop.

Alternatively, if the nozzle section 21 is filled (found with step S8), the auto-focus process for the filled capillary is executed with step S11. The total number of the pixels representing the inner-capillary area section 2 is counted, and the focused position corresponds to where the number of these pixels is the largest.

Again, the focused position may be found with one of the embodiments described below with reference to Figures 5 to 7. A Boolean variable "Focused?" is set True if the fine search phase is completed, the number of the bright pixels has been checked at all tested capillary positions and the dispenser capillary is at the position that corresponds to the largest capillary wall size.

Subsequently, it is tested whether the dispenser capillary 20 is focused, i.e. arranged in the focal plane of the camera device 10 (step S12), again e.g. by checking the Boolean variable "Focused?" (step S12). If the dispenser capillary 20 is focused, the process is completed, followed by the regular dispenser apparatus operation. Otherwise, if not, the process returns to step S11 directly or after repeating steps S6, S2, S4, S7 and S8. The auto-focus process step S11 for the filled capillary is repeated until the dispenser capillary 20 is focused, i.e. the inner-capillary area section 2 is maximized in the nozzle image.

In the following, embodiments of the auto-focus process of step S11 or S9 are described with reference to Figures 5 to 7. Figures 5 to 7 show an example of an ROI curve representing the ROI, i.e. the area of the inner-capillary area section, in dependency of the distance x between the camera device, in particular the camera sensor thereof, and the dispenser capillary, in particular the centre thereof. The ROI curve is an irregular function with multiple maxima. For obtaining the focal distance, the global maximum indicated with a star is to be found.

Before executing the auto-focus process, the ROI curve is unknown. Generally, the auto-focus process puts a number of "probes" on different positions along the x-axis and measures e.g. the corresponding inner-capillary area values. In practical implementation, the auto-focus process includes controlling the dispenser capillary to move with increments and to stop at different positions, take images, and then detect e.g. the inner-capillary area and measure its size. Based on these measured values, the auto-focus process determines the best position for the dispenser capillary that corresponds to the maximum inner-capillary area size.

To achieve this task, a simple process is to spread a set of e.g. 18 probes uniformly along the x-axis as schematically shown by the dotted arrows in Figure 5. In practice, this means that the dispenser capillary moves from one side to the other with a fixed step size and make it stop at each step to take an image for analysis. Then, based on the inner-capillary area size detected on the images taken at each step, the algorithm can choose the maximum value and make the dispenser capillary move to the corresponding position as the final focused position.

As shown in Figure 5, the maximum value and final focused position obtained with the fixed increment would be at P1, which is not exactly the star point (global maximum) to be found. The global maximum could be better approached with a reduced increment. However, there is a trade-off in this simple autofocusing process between the accuracy of the final focused position and the total execution time: the smaller the step size is, the longer time the process will take to find the final focused position, and the more accurate this final focused position will be; on the contrary, the larger the step size is, the less time the process will take, and the less accurate the final focused position will be. Furthermore, the step size is to be chosen such that finding a local maximum instead of the global maximum is avoided.

For improving this simple process, a two-phase process can be employed for making the auto-focus process more efficient, as shown with drawn arrows in Figure 5. In practice, this is the preferred process for autofocusing on an empty dispenser capillary (step S9 in Figure 2).

The complete auto-focus process of Figure 5 comprises a first movement phase (coarse search, shown with the dotted arrows) with uniformly spreading a set of probes along the x-axis starting from P0 with a first step size (bigger step size, e.g. 100 µm and finding a first selected imaging distance, i.e. the position P1 that corresponds to the maximum value of inner-capillary area. Subsequently, a second movement phase (fine search, shown with drawn arrows) of stepwise moving the dispenser capillary with a second step size (smaller step size, e.g. 20 µm) is executed, wherein a new set of uniformly spaced probes is added around the first selected imaging distance P1. A second selected imaging distance, i.e. the position P2, is found that corresponds to the maximum value of inner-capillary area with the smaller step size and provides the final focused position. The focal distance to be found is assigned to the second selected imaging distance P2, where the size of the inner-capillary area section is maximized in the second movement phase.

Advantageously, this process is potentially more efficient than the previous simple process with one single fixed increment, by using a larger coarse search step to reduce the step numbers in the coarse search, and then use a smaller fine search step to achieve the same accuracy of the search result as in the previous simple process. In this process, the parameters, like the coarse first step size, the fine second step size and the searching range for the second movement phase search are chosen for avoiding to find a local maximum.

As shown in Figure 5, there is still a certain distance between P2 and the ideal focal position (star). For making the final focused position closer to the star point, the step size can be further reduced, i.e., by adding more probes, or by implementing the embodiment of the auto-focus process illustrated in Figures 6 and 7.

The auto-focus process of Figures 6 and 7 is a three-phase process with a self-adjusted step size to make it more efficient (in practice this is the preferred process for autofocusing on filled dispenser capillaries, step S11 in Figure 2). The first and second movement phases (coarse search) are adapted for finding the starting position of the third movement phase (fine search). This process is different from the previous two processes described with reference to Figure 5, because it uses a classification result (three zones -1, 0 and +1) based on the shape of the inner-capillary area in the first and second movement phases for coarse search instead of using directly the size of the inner-capillary area.

The first to third zones are assigned such that imaging distances in the first zone (-1) are smaller than the focal distance, imaging distances in the second zone (+1) are larger than the focal distance, and the third zone (0) is located between the first and second zones (-1, +1). The third zone (0) includes the focal distance. With a practical example, the third zone may have a width of e.g. 200 µm.

The first movement phase (steps FS1 to FS5) comprises stepwise moving the dispenser capillary with a first step size (e.g. 500 µm) from the starting point P0 in the first zone (-1) towards the second zone (+1) and determining an initial first border LB1 (Left Border) at the last step before the third zone (0) in the first zone (-1) and an initial second border RB1 (Right Border) in the third zone (0) or at the first step outside the third zone (0) in the second zone (+1). Optionally, if an initial position of the dispenser capillary is in zone (0) or zone (+1) before starting the auto-focus process, the dispenser capillary is moved to zone (-1) by a stepwise or continuous shift, so that the starting point P0 is set in zone (-1).

The first movement phase stops when the zone prediction changes, i.e. that the focal position is in between the initial first and second borders. Subsequently, the second movement phase of the coarse search is executed starting from the initial second border with a stepwise decreasing step size.

The position of the dispenser capillary in one of the first to third zones is detected based on an output of a classifier module implemented by the control device 40 (see Figure 1). The classifier module used in the first (and second) movement phase(s) is based on the finding of the inventors that the ROI has two different typical shapes when the axis of the dispenser capillary is in front of or behind the focal plane of the camera device, resp.. The different shapes are illustrated in Figure 4, which shows in Figures 4A, 4B and 4C the images when the dispenser capillary 20 is displaced by 1500 µm, 1000 µm and 500 µm from the focal plane towards the camera device 10 (see Figure 1) and in Figures 4E, 4F and 4G the images when the dispenser capillary 20 is displaced by 500 µm, 1000 µm and 1500 µm from the focal plane off the camera device 10 (Figure 4D shows the in-focus image). The classifier module is trained to classify these two cases in a preparation process. If the dispenser capillary has an inner shape other than the illustrated example, corresponding differences in the shape of the inner-capillary area section can be found and used for training the classifier module.

The classifier module is used for determining a direction of moving the dispenser capillary. An input of the classifier module preferably is a feature vector extracted from the current image, which describes the shape of the inner-capillary area section, and the spatial relation of this inner-capillary area section to the bounding box of the detected dispenser capillary on the current image. The output of the classifier module determines the next step direction: if the output is 0/+1, take a step towards the "-1" zone; if the output is -1, take a step towards the "+1" zone.

The second movement phase (steps FS6 to FS9) comprises of stepwise moving the dispenser capillary with a stepwise reduced second step size from the initial second border towards the initial first border and, when reaching the first zone (-1), back towards the initial second border. Each step creates updated first and second borders (RB2, RB3, LB2), until a distance between the updated first and second borders is smaller than a predetermined minimum step size (Sₘᵢₙ), e.g. 40 µm.

The aim of the second movement phase is to reduce the distance between the LB and RB to make them as close as possible to the left border of zone (0) (flag point in Figure 6), and then move the dispenser capillary to the last updated LB. The step width (increment) in each step is a fraction, e. g. half, of the previous increment. As an example, the dispenser capillary moves to the center point between LB1 and RB1 with step FS6, and this point is defined as the updated LB/RB depending on the output of the classifier (LB if output is -1, RB if output is 0 or +1). In the illustrated example, the updated second border RB2 is in zone (0). Based on the output of the classifier module, the direction changes when the zone (-1) is reached (after step FS8 in the illustrated example).

This stepwise reduction of increment in the second movement phase ends when the distance between currently updated LB and RB becomes smaller than Sₘᵢₙ. Then the coarse search is completed by moving the dispenser capillary to the last updated LB position (in the example of Figure 6 this is the step FS9 in which the dispenser capillary is moved from LB2 to RB3).

The subsequent third movement phase (fine search) comprises stepwise moving the dispenser capillary with a third step size smaller than or equal to the minimum step size (Sₘᵢₙ) from the last updated first border towards the last updated second border and determining the size of e.g. the inner-capillary area section at each step. Using e.g. the inner-capillary area size as criteria, the objective of the third movement phase is to find the star point (that corresponds to the maximum value of the inner-capillary area), as shown in Figure 7 (extended section of Figure 6) with 5 steps.

It is known that the starting position of the third movement phase is on the left side of the focal position (star position) as a result of the second movement phase and that the ROI curve should be monotonically increasing until the focal position and decreasing smoothly after the focal position. Therefore, the dispenser capillary is moved towards the zone (+1), i.e. in the right direction, with the fixed third step size, e.g. 20 µm. At each step, the inner-capillary area size is measured and compared to the size at the previous position. As long as the size increases, stepwise moving is continued. Otherwise, with a decreasing size, the maximum value has been passed. The dispenser capillary is moved back one step. The obtained position P3 in Figure 7 (selected imaging distance between the camera device and the dispenser capillary) is considered as the selected step, where the size of the inner-capillary area section is maximized in the third movement phase. The focal distance to be obtained is assigned to the selected imaging distance.

In summary, the three-phase process with a self-adjusted step size of Figures 6 and 7 has the following advantage. This process is more efficient and accurate compared to the two previous processes described with reference to Figure 5. It uses only e.g. 13 steps in total (the first process took 18 steps and the second process took 24 steps) and it can achieve a better result (the end position of the fine search is closer to the star position compared to the two previous processes).

It is noted that the auto-focus process can be executed in an analogue way with an empty capillary (step S9 in Figure 2). In this case, the classifier module is trained to classify different shapes of the capillary wall sections for finding the position of the dispenser capillary in one of the "-1" or "+1" zones, and the focusing steps of the coarse and fine searches can be executed in a corresponding manner. Alternatively, a curve representing the capillary wall area in dependency on the capillary position can be determined and an exhaustive search can be conducted on the capillary wall area - capillary position - curve to find the position with the minimum capillary wall area value, as described with reference to Figure 5.

The features of the invention disclosed in the above description, the drawings and the claims can be of significance both individually as well as in combination or sub-combination for the realization of the invention in its various embodiments. The invention is not restricted to the preferred embodiments described above. Rather a plurality of variants and derivatives is possible which also use the inventive concept and therefore fall within the scope of protection. In addition, the invention also claims protection for the subject and features of the subclaims independently of the features and claims to which they refer.

## Claims

1. Method of adjusting a camera device (10) and a dispenser capillary (20) of a droplet dispenser device (100) relative to each other, comprising the steps
- positioning the camera device (10) and the dispenser capillary (20) along an imaging axis (12) of the camera device (10), such that a focal distance is set between the camera device (10) and the dispenser capillary (20), wherein a focused dispenser capillary image (1) including an inner-capillary area section (2) and at least one capillary wall section (3) is created within a field of view of the camera device (10), wherein
- the focal distance is set by an axial focusing movement of at least one of the camera device (10) and the dispenser capillary (20) along the imaging axis (12) in dependency on image information collected with the camera device (10),
**characterized in that**
- the image information comprises at least one of a size of the inner-capillary area section (2) and a size of the at least one capillary wall section (3), and
- the axial focusing movement of the at least one of the camera device (10) and the dispenser capillary (20) is executed such that the size of the inner-capillary area section (2) is maximized and/or the size of the at least one capillary wall section (3) is minimized.

2. Method according to claim 1, wherein the axial focusing movement includes the steps
- stepwise moving at least one of the camera device (10) and the dispenser capillary (20) with a predetermined step size from a first imaging distance between the camera device (10) and the dispenser capillary (20) to a second imaging distance between the camera device (10) and the dispenser capillary (20) and determining the size of the inner-capillary area section (2) and/or the size of the at least one capillary wall section (3) at each step, wherein the focal distance is between the first and second imaging distances, and
- assigning the focal distance to a selected imaging distance between the camera device (10) and the dispenser capillary (20) at a selected step, where the size of the inner-capillary area section (2) is maximized and/or the size of the at least one capillary wall section (3) is minimized.

3. Method according to claim 1, wherein the axial focusing movement includes the steps
- a first movement phase of stepwise moving at least one of the camera device (10) and the dispenser capillary (20) with a first step size from a first imaging distance between the camera device (10) and the dispenser capillary (20) to a second imaging distance between the camera device (10) and the dispenser capillary (20) and determining the size of the inner-capillary area section (2) and/or the size of the at least one capillary wall section (3) at each step, wherein the focal distance is between the first and second imaging distances,
- determining a first selected imaging distance between the camera device (10) and the dispenser capillary (20) at a first selected step, where the size of the inner-capillary area section (2) is maximized and/or the size of the at least one capillary wall section (3) is minimized in the first movement phase,
- a second movement phase of stepwise moving at least one of the camera device (10) and the dispenser capillary (20) with a second step size around the selected imaging distance and determining the size of the inner-capillary area section (2) and/or the size of the at least one capillary wall section (3) at each step, wherein the second step size is smaller than the first step size, and
- assigning the focal distance to a second selected imaging distance between the camera device (10) and the dispenser capillary (20) at a second selected step, where the size of the inner-capillary area section (2) is maximized and/or the size of the at least one capillary wall section (3) is minimized in the second movement phase.

4. Method according to claim 1, wherein the axial focusing movement includes the steps
- assigning a first zone (-1), a second zone (+1) and a third zone (0) to a range between the camera device (10) and the dispenser capillary (20), wherein imaging distances in the first zone (-1) are smaller than the focal distance, imaging distances in the second zone (+1) are larger than the focal distance, and the third zone (0) is located between the first and second zones (-1, +1) and the third zone (0) includes the focal distance,
- a first movement phase of stepwise moving at least one of the camera device (10) and the dispenser capillary (20) with a first step size from the first zone (-1) to the second zone (+1) and determining an initial first border at the last step before the third zone (0) in the first zone (-1) and an initial second border in the third zone (0) or at the first step outside the third zone (0) in the second zone (+1),
- a second movement phase of stepwise moving at least one of the camera device (10) and the dispenser capillary (20) with a stepwise adapted second step size from the initial second border towards the initial first border and, when reaching the first zone (-1), back towards the initial second border, wherein updated first and second borders are assigned to the steps in the second movement phase, until a distance between the updated first and second borders is smaller than a predetermined minimum step size (Sₘᵢₙ),
- a third movement phase of stepwise moving at least one of the camera device (10) and the dispenser capillary (20) with a third step size from the updated first border towards the updated second border and determining the size of the inner-capillary area section (2) and/or the size of the at least one capillary wall section (3) at each step, wherein the third step size is smaller than or equal to the minimum step size (Sₘᵢₙ), and
- assigning the focal distance to a selected imaging distance between the camera device (10) and the dispenser capillary (20) at a selected step, where the size of the inner-capillary area section (2) is maximized and/or the size of the at least one capillary wall section (3) is minimized in the third movement phase.

5. Method according to claim 4, including a step of
- determining a movement direction in the first and/or second movement phases by classifying whether a current imaging distance is included in the first zone (-1) or in the second zone (+1) or in the third zone (0) based on at least one of a shape of the inner-capillary area section (2) and a shape of the at least one capillary wall section (3).

6. Method according to one of the foregoing claims, wherein
- the size of the inner-capillary area section (2) and/or the size of the at least one capillary wall section (3) is obtained by binarizing the dispenser capillary image (1) and analyzing the number of pixels associated with the inner-capillary area section (2) and/or the at least one capillary wall section (3).

7. Method according to one of the foregoing claims, wherein the
- the focusing movement includes moving the dispenser capillary (20), while the camera device (10) is fixed.

8. Method according to one of the foregoing claims, including a further step of
- lateral aligning movement of the camera device (10) and the dispenser capillary (20) relative to each other before the axial focusing movement, such that a full cross-sectional image of the dispenser capillary (20) is included, preferably centered, in the field of view of the camera device (10).

9. Dispensing method of depositing at least one liquid droplet with a droplet dispenser device on a target, wherein the droplet dispenser device (100) comprises at least one dispenser capillary (20) and a camera device (10), comprising the steps of
- adjusting the camera device (10) and the dispenser capillary (20) relative to each other with the adjusting method according to one of the foregoing claims, such that the focal distance is set and the focused dispenser capillary image (1) is created within a field of view of the camera device (10), and
- operating the at least one dispenser capillary (20) for depositing the at least one liquid droplet on the target.

10. Focusing apparatus (100) being configured for adjusting a camera device (10) and a dispenser capillary (20) of a droplet dispenser device (200) relative to each other, comprising
- a positioning device (30) being configured for positioning the camera device (10) and the dispenser capillary (20) along an imaging axis (12) of the camera device (10), such that a focal distance is set between the camera device (10) and the dispenser capillary (20), wherein a focused dispenser capillary image (1) including an inner-capillary area section (2) and at least one capillary wall section (3) is created within a field of view of the camera device (10),
- a focusing translation stage (31) being arranged for setting the focal distance by an axial focusing movement of at least one of the camera device (10) and the dispenser capillary (20) along the imaging axis (12) in dependency on image information collected with the camera device (10), and
- a control device (40) being configured for controlling the focusing translation stage (31) in dependency on the image information collected with the camera device (10),
**characterized in that**
- the image information comprises at least one of a size of the inner-capillary area section (2) and a size of the at least one capillary wall section (3), and
- the focusing translation stage (31) is arranged for the axial focusing movement of at least one of the camera device (10) and the dispenser capillary (20), such that the size of the inner-capillary area section (2) is maximized and/or the size of the at least one capillary wall section (3) is minimized.

11. Focusing apparatus according to claim 10, wherein the control device (40) and the focusing translation stage (31) is arranged for executing the axial focusing movement with
- stepwise moving at least one of the camera device (10) and the dispenser capillary (20) with a predetermined step size from a first imaging distance between the camera device (10) and the dispenser capillary (20) to a second imaging distance between the camera device (10) and the dispenser capillary (20) and determining the size of the inner-capillary area section (2) and/or the size of the at least one capillary wall section (3) at each step, wherein the focal distance is between the first and second imaging distances, and
- assigning the focal distance to a selected imaging distance between the camera device (10) and the dispenser capillary (20) at a selected step, where the size of the inner-capillary area section (2) is maximized and/or the size of the at least one capillary wall section (3) is minimized.

12. Focusing apparatus according to claim 10, wherein the control device (40) and the focusing translation stage (31) is arranged for executing the axial focusing movement with
- a first movement phase of stepwise moving at least one of the camera device (10) and the dispenser capillary (20) with a first step size from a first imaging distance between the camera device (10) and the dispenser capillary (20) to a second imaging distance between the camera device (10) and the dispenser capillary (20) and determining the size of the inner-capillary area section (2) and/or the size of the at least one capillary wall section (3) at each step, wherein the focal distance is between the first and second imaging distances,
- determining a first selected imaging distance between the camera device (10) and the dispenser capillary (20) at a first selected step, where the size of the inner-capillary area section (2) is maximized and/or the size of the at least one capillary wall section (3) is minimized in the first movement phase,
- a second movement phase of stepwise moving at least one of the camera device (10) and the dispenser capillary (20) with a second step size around the selected imaging distance and determining the size of the inner-capillary area section (2) and/or the size of the at least one capillary wall section (3) at each step, wherein the second step size is smaller than the first step size, and
- assigning the focal distance to a second selected imaging distance between the camera device (10) and the dispenser capillary (20) at a second selected step, where the size of the inner-capillary area section (2) is maximized and/or the size of the at least one capillary wall section (3) is minimized in the second movement phase.

13. Focusing apparatus according to claim 10, wherein the control device (40) and the focusing translation stage (31) is arranged for executing the axial focusing movement with
- assigning a first zone (-1), a second zone (+1) and a third zone (0) to a range between the camera device (10) and the dispenser capillary (20), wherein imaging distances in the first zone (-1) are one of larger and smaller than the focal distance, imaging distances in the second zone (+1) are the other one of larger and smaller than the focal distance, and the third zone (0) is located between the first and second zones (-1, +1) and the third zone (0) includes the focal distance,
- a first movement phase of stepwise moving at least one of the camera device (10) and the dispenser capillary (20) with a first step size from the first zone (-1) to the second zone (+1) and determining an initial first border at the first step outside the third zone (0) in the first zone (-1) and an initial second border at the first step outside the third zone (0) in the second zone (+1),
- a second movement phase of stepwise moving at least one of the camera device (10) and the dispenser capillary (20) with a stepwise adapted second step size from the initial second border towards the initial first border and, when reaching the first zone (-1), back towards the initial second border, wherein updated first and second borders are assigned to the steps in the second movement phase, until a distance between the updated first and second borders is smaller than a predetermined minimum step size (Sₘᵢₙ),
- a third movement phase of stepwise moving at least one of the camera device (10) and the dispenser capillary (20) with a third step size from one of the updated first and second borders towards the other one of the updated first and second borders and determining the size of the inner-capillary area section (2) and/or the size of the at least one capillary wall section (3) at each step, wherein the third step size is smaller than the minimum step size (Sₘᵢₙ), and
- assigning the focal distance to a selected imaging distance between the camera device (10) and the dispenser capillary (20) at a selected step, where the size of the inner-capillary area section (2) is maximized and/or the size of the at least one capillary wall section (3) is minimized in the third movement phase.

14. Focusing apparatus according to claim 13, wherein
- the control device (40) is configured for determining a movement direction in the second movement phase by classifying whether a current imaging distance is included in the first zone (-1) or in the second zone (+1) or on the third zone (0) based on at least one of a shape of the inner-capillary area section (2) and a shape of the at least one capillary wall section (3).

15. Focusing apparatus according to one of the claims 10 to 14, wherein
- the control device (40) is configured for obtaining the size of the inner-capillary area section (2) and/or the size of the at least one capillary wall section (3) by binarizing the dispenser capillary image (1) and counting the number of pixels associated with the inner-capillary area section (2) and/or the at least one capillary wall section (3).

16. Focusing apparatus according to one of the claims 10 to 15, wherein the
- the focusing translation stage (31) is arranged for moving the dispenser capillary (20), while the camera device (10) is fixed.

17. Focusing apparatus according to one of the claims 10 to 16, further including
- an aligning translation stage (32) being arranged for a lateral aligning movement of the camera device (10) and the dispenser capillary (20) relative to each other before the axial focusing movement such that a full cross-sectional image of the dispenser capillary (20) is included, preferably centered, in the field of view of the camera device (10).

18. Droplet dispenser device (200) being configured for depositing at least one liquid droplet on a target, comprising
- at least one dispenser capillary (20) being arranged for depositing the at least one liquid droplet on the target,
- a camera device (10) being arranged for monitoring the at least one dispenser capillary (20), and
- a focusing apparatus (100) according to one of the claims 10 to 17.
